# FASCICULE DE BREVET EUROPEEN

(11) **EP 2 998 603 B1**
(45) Date de publication et mention de la délivrance du brevet: **12.10.2016**
(21) Numéro de dépôt: 15181303.7
(22) Date de dépôt: 17.08.2015
(51) Int. Cl.: F16D 21/06, F16D 25/10

(54) **MECANISME A DOUBLE EMBRAYAGE HUMIDE POUR UN SYSTEME DE TRANSMISSION**
DOPPELNASSKUPPLUNG FÜR EIN GETRIEBE
DUAL WET CLUTCH MECHANISM FOR A TRANSMISSION SYSTEM

(30) Priorité: 18.09.2014 FR 1458830
(43) Date de publication de la demande: 23.03.2016
(73) Titulaire: Valeo Embrayages, 80009 Amiens Cedex 2 (FR)
(72) Inventeur: ARHAB, Rabah, 95350 ST BRICE SOUS FORET (FR); RIBOT, Herve, 80200 PERONNE (FR); CAUMARTIN, Laurent, 80600 BEAUQUESNE (FR)

(56) Documents cités:
- EP-A1- 1 195 537
- EP-A1- 1 522 753
- EP-A1- 1 686 277
- US-A1- 2006 086 586

## Description

La présente invention concerne un mécanisme à double embrayage humide pour un système de transmission. voir EP1522753 comme l'état de la technique plus proche.

La présente invention concerne plus particulièrement un mécanisme à double embrayage humide pour un système de transmission, notamment de véhicule automobile, comportant autour d'un axe de rotation au moins un premier embrayage et un deuxième embrayage respectivement de type multidisques, le premier embrayage comportant au moins un premier piston et le deuxième embrayage comportant au moins un deuxième piston, lesdits premier et deuxième pistons étant déplacés axialement en sens opposé pour venir, en position embrayée, serrer un ensemble multidisques contre des moyens de réaction.

On connaît de l'art antérieur un tel mécanisme à double embrayage humide pour un système de transmission, notamment de véhicule automobile.

On distingue notamment deux conceptions de mécanisme à double embrayage, d'une part les mécanismes à double embrayage dits « à sec » et, d'autre part, les mécanismes à double embrayage dits « humide ».

La présente invention concerne plus particulièrement un double embrayage humide (ou « *Double Wet Clutch* » en anglais).

Dans le cas d'un mécanisme à double embrayage humide, les embrayages sont généralement de type multidisques et les garnitures de friction des disques de l'ensemble multidisques sont maintenues en permanence humides par de l'huile.

Le système de transmission comportant ledit mécanisme à double embrayage humide comporte généralement au moins une coquille d'entrée qui est liée en rotation à un arbre menant et à un voile d'entrainement pour lier en rotation ladite coquille d'entrée audit mécanisme, lequel mécanisme est commandé pour accoupler sélectivement ledit arbre menant à un premier arbre mené et à un deuxième arbre mené.

Pour ce faire, le mécanisme à double embrayage comporte un premier embrayage qui, agencé par exemple côté boîte de vitesses, sert à la fois au démarrage et à l'engagement des rapports impairs et un deuxième embrayage qui, agencé par exemple côté moteur, prend en charge les rapports pairs et la marche arrière.

Le premier embrayage et le deuxième embrayage transmettent alternativement la puissance d'entrée (le couple et la vitesse) de l'arbre menant, qui est lié en rotation au moteur, à l'un des deux arbres menés qui sont liés à la boîte de vitesses et généralement coaxiaux.

Pour une sécurité améliorée, le premier embrayage et le deuxième embrayage du mécanisme sont respectivement débrayés au repos, c'est à dire « normalement ouvert », et sont fermés activement par des moyens d'actionnement hydraulique d'un dispositif de commande qui est associé au mécanisme à double embrayage.

L'intérêt croissant porté aux mécanismes à double embrayage est notamment lié au confort et aux performances obtenues, ainsi qu'à la continuité de l'accélération lors des changements de rapport, sans rupture de couple.

Les systèmes de transmission comportant un tel mécanisme à double embrayage apportent aussi, par comparaison notamment avec une boîte de vitesse automatique traditionnelle, un gain de consommation et des émissions de CO₂.

Pour certaines applications, le premier embrayage et le deuxième embrayage du mécanisme à double embrayage humide sont axialement juxtaposés, agencés l'un à côté de l'autre, et les pistons de chacun desdits premier et deuxième embrayages sont déplacés axialement en sens opposé pour venir en position embrayée.

Les moyens de réaction du premier embrayage et du deuxième embrayage sont alors interposés axialement entre l'ensemble multidisques du premier embrayage et l'ensemble multidisques du deuxième embrayage.

L'ensemble multidisques du premier embrayage et l'ensemble multidisque du deuxième embrayage sont axialement à distance de l'axe de rotation.

L'ensemble multidisques du premier embrayage E1 et du deuxième embrayage E2 comportant respectivement des disques de friction qui sont liés en rotation respectivement au premier arbre A1 et au deuxième arbre A2 mené par respectivement un porte-disques extérieur formant l'élément de sortie de l'embrayage. Chaque porte-disques extérieur comporte une extension radiale et une extension axiale. L'extension axiale de chacun des porte disques extérieur s'étend le long d'un axe parallèle à l'axe de rotation.

Un tel agencement des ensembles multidisques du premier embrayage et du deuxième embrayage engendre une inertie élevée. Une telle inertie peut entraîner une usure prématurée du double embrayage, voir un disfonctionnement d'un tel double embrayage. De plus, un tel agencement est encombrant.

Par conséquent, un tel mécanisme à double embrayage humide pour un système de transmission ne donne pas entière satisfaction, notamment en termes de fiabilité de fonctionnement.

Le but de la présente invention est notamment de proposer un mécanisme à double embrayage humide pour un système de transmission permettant de résoudre au moins une partie des problèmes de l'art antérieur, en particulier la fiabilité.

Dans ce but, l'invention propose un mécanisme à double embrayage humide du type décrit précédemment, dans lequel l'extension axiale d'au moins l'un desdits porte-disques extérieur présente un décalage radial.

Avantageusement, le décalage radial permet de réduire notablement l'inertie de l'ensemble multidisques et de réduire l'encombrement radial de l'embrayage.

Selon d'autres caractéristiques de l'invention :
- le porte-disques extérieur du deuxième embrayage est logé à l'intérieur du porte-disques extérieur du premier embrayage, le porte-disques extérieur du premier embrayage comportant ladite extension axiale avec le décalage radial.
- l'extension axiale du porte-disques extérieur présentant un décalage axial comporte une première partie et une deuxième partie s'inscrivant chacune respectivement dans un premier cylindre et dans un deuxième cylindre, le rayon R1 de la première partie étant supérieur au rayon R2 de la deuxième partie.
- la première partie et la deuxième partie forment une seule pièce.

Ainsi, avantageusement, le long de l'extension axiale est formée localement une section de forme tronconique, la section de cette forme tronconique se rétrécissant en s'éloignant de l'extension radiale.
- la première partie et la deuxième partie forment chacune une pièce distincte, lesdites parties étant liées en rotation, par exemple par soudage ou rivetage. La deuxième partie est reliée à la première partie tout en étant décalée radialement en direction de l'axe de rotation par rapport à la première partie. Une telle extension axiale en deux parties permet d'avoir des parties d'épaisseur différentes l'une par rapport à l'autre. Ainsi, l'inertie et l'effort sur la partie la plus éloignée de l'extension radiale peuvent être plus facilement contrôlés.
- une extrémité de la première partie et une extrémité de la deuxième partie forment chacune une collerette radiale, la collerette de la première partie et la collerette de la deuxième partie étant liées en rotation l'une avec l'autre.
- une extrémité de la première partie et une extrémité de la deuxième partie forment chacune un bord périphérique s'étendant axialement, le bord périphérique de la première partie et le bord périphérique de la deuxième partie étant liés en rotation l'un avec l'autre par superposition de leur bord périphérique respectif. La liaison entre ces deux bords étant telle que la deuxième partie est décalée radialement par rapport à la première partie.

- le rayon R2 de la deuxième partie est réduit à une valeur correspondant à un jeu J mesuré entre les deux porte-disques extérieur, à l'endroit de la deuxième partie de l'extension axiale, le jeu J étant suffisant pour permettre le glissement d'un des porte-disques extérieur sur l'autre des porte-disques extérieur lors du montage. Plus précisément, des dentures du porte-disques extérieur qui est le plus éloigné de l'axe de rotation sont insérées au travers d'une denture complémentaire de l'autre des porte-disques extérieur avec un léger jeu J au moment du montage.
- l'extension axiale du porte-disques extérieur comporte au moins un moyen raidisseur pour rigidifier ladite extension.

Du fait de l'extension réalisée en deux parties, la partie proche de l'extension radiale peut être réduite à une épaisseur minimum. Sa rigidité peut être renforcée par la présence de moyens raidisseurs sur cette même partie. Ainsi, il est possible de diminuer l'épaisseur et l'inertie de l'embrayage.
- l'extension axiale forme au moins une déformation locale s'étendant en direction opposée à l'axe de rotation.
- la déformation locale est au moins partiellement annulaire.
- l'extension axiale comporte une surface externe périphérique cannelée.
- l'extension axiale comporte au moins une ouverture. Ainsi, l'inertie du mécanisme peut encore être réduite.

L'invention a également pour objet un mécanisme à double embrayage humide du type décrit précédemment, dans lequel l'extension axiale d'au moins l'un des deux porte-disques extérieur d'au moins l'un des deux embrayages comporte une première partie et une deuxième partie formant chacune une pièce distincte, la deuxième partie servant de support aux disques, les parties étant liées en rotation l'une avec l'autre.

La deuxième partie peut être décalée radialement par rapport à la première partie ou être disposée selon un même axe que celui de la première partie. Ainsi, une telle extension axiale en deux parties permet d'avoir des parties d'épaisseur différentes l'une par rapport à l'autre. L'inertie et l'effort sur la partie la plus éloignée de l'extension radiale peuvent alors être plus facilement contrôlés.

Au moins une ouverture dans l'une au moins des parties peut être prévue. Avantageusement, l'ouverture est pratiquée dans la première partie qui est liée à l'extension radiale.

D'autres caractéristiques et avantages de l'invention apparaîtront au cours de la lecture de la description détaillée qui va suivre pour la compréhension de laquelle on se reportera aux dessins annexés parmi lesquels :
- la figure 1 est une demi-vue en coupe axiale qui représente un système de transmission comportant un mécanisme à double embrayage humide et qui illustre un mode de réalisation des moyens de réaction, selon l'invention ;
- la figure 2 est une demi-vue en coupe axiale qui, décalée angulairement par rapport à celle de la figure 1 ;
- les figures 3A et 3B sont respectivement une vue en coupe et une vue tridimensionnelle d'un porte-disques du premier embrayage, selon l'invention ;
- les figures 4A et 4B sont respectivement une vue en coupe et une vue tridimensionnelle du porte-disques du premier embrayage, selon une variante de l'invention,
- figure 5 est une vue tridimentionnelle du porte-disques du premier embrayage, selon une variante de l'invention,
- les figures 6A et 6B sont respectivement une vue en coupe et une vue tridimentionnelle du porte-disques du premier embrayage, selon une autre variante de l'invention ;
- les figures 7A et 7B sont respectivement des vues en coupe axiale et transversale des porte-disques du système de transmission, selon l'invention.

Dans la suite de la description et les revendications, on utilisera à titre non limitatif et afin d'en faciliter la compréhension, les termes « avant » ou « arrière » selon la direction considérée par rapport à une orientation axiale déterminée par l'axe O de rotation et les termes « intérieur / interne » ou « extérieur / externe » par rapport à la distance avec l'axe O suivant une orientation radiale, orthogonale à ladite orientation axiale.

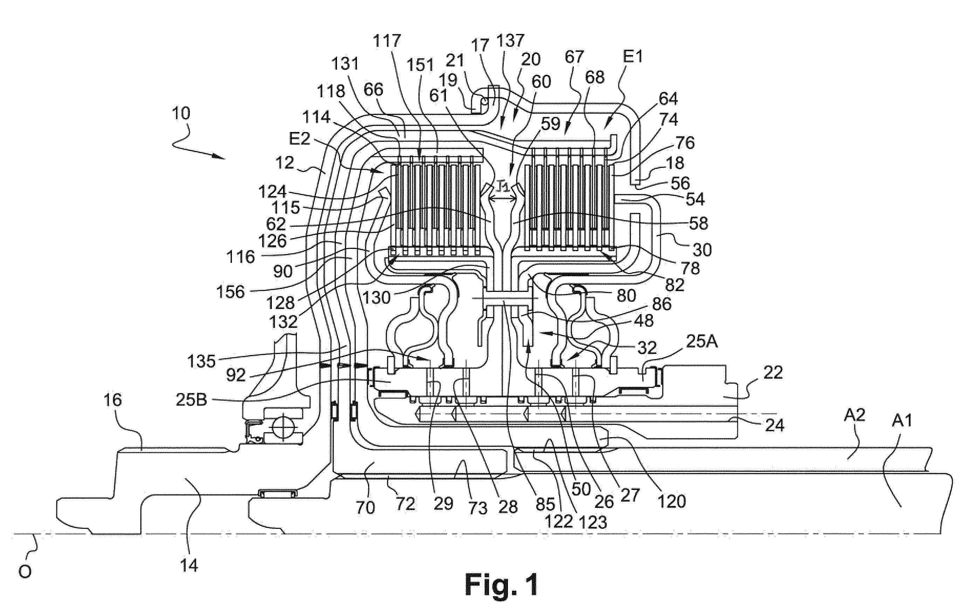

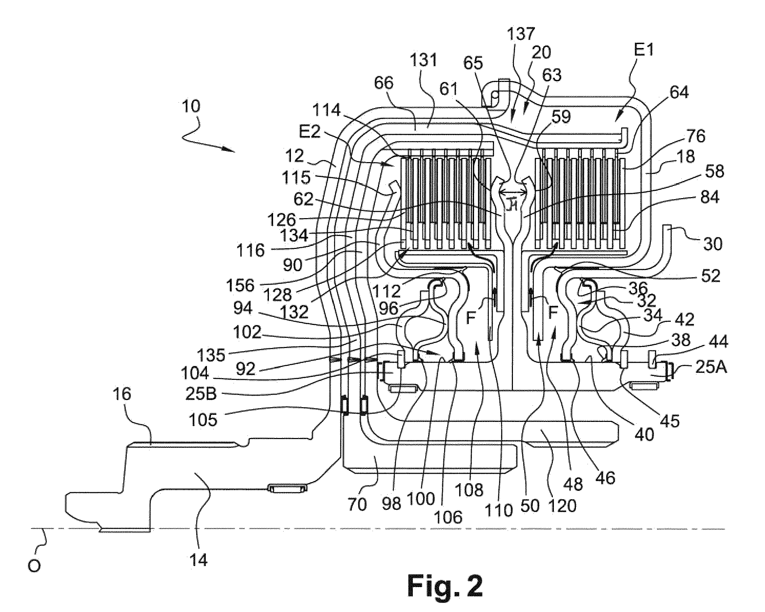

On a représenté sur les figures 1 et 2, un exemple de réalisation d'un système 10 de transmission, notamment pour un véhicule automobile, présentant un axe O de rotation.

Le système 10 de transmission comporte autour de l'axe O au moins un élément d'entrée qui est lié en rotation à un arbre menant (non représenté).

De préférence, l'élément d'entrée du système 10 comporte au moins une coquille 12 d'entrée qui est liée en rotation à un moyeu 14 d'entrée.

La coquille 12 d'entrée, présentant globalement une forme en « L », comporte une partie d'orientation radiale reliée par un coude à une partie d'orientation axiale.

Le moyeu 14 comporte une partie d'orientation radiale et une partie d'orientation axiale, le moyeu 14 étant agencé radialement à l'intérieur par rapport à la coquille 12.

La partie d'orientation axiale du moyeu 14 située à l'intérieur de la partie radiale, s'étend axialement vers l'arrière dans une direction correspondant à celle du moteur.

Le moyeu 14 comporte des cannelures 16, ménagées dans la surface cylindrique externe de la partie axiale, pour la liaison en rotation avec l'arbre menant de l'élément d'entrée formé par au moins la coquille 12 et le moyeu 14.

L'extrémité intérieure de la partie radiale de la coquille 12 et celle extérieure de la partie radiale du moyeu 14 d'entrée sont solidaires, de préférence fixées ensemble par soudage.

En variante, l'extrémité intérieure de la partie radiale de la coquille 12 d'entrée et l'extrémité extérieure de la partie radiale du moyeu 14 d'entrée sont fixées ensemble par rivetage.

Le moyeu 14 d'entrée est par exemple lié en rotation par l'intermédiaire des cannelures 16 à la sortie d'un dispositif d'amortissement ou amortisseur (tel qu'un double volant amortisseur, etc.) dont l'entrée est liée, par l'intermédiaire notamment d'un volant moteur, à l'arbre menant formé par un vilebrequin qu'entraîne en rotation un moteur équipant le véhicule automobile.

La coquille 12 d'entrée est entraînée en rotation par le moteur par l'intermédiaire du moyeu 14 d'entrée.

La coquille 12 d'entrée est liée en rotation à un voile 18 d'entrainement, lequel voile 18 d'entraînement lie en rotation ladite coquille 12 d'entrée à un mécanisme 20 à double embrayage humide.

La coquille 12 d'entrée et le voile 18 d'entraînement sont liés en rotation par coopération de formes.

La coquille 12 d'entrée comporte, à son extrémité radiale externe d'orientation axiale, des pattes 17 qui s'étendent radialement vers l'extérieur et qui s'interpénètrent avec des pattes 19 que comporte, à son extrémité radiale externe d'orientation axiale, le voile 18 d'entraînement.

Les pattes 19 du voile 18 d'entraînement s'étendent radialement vers l'intérieur et sont décalées angulairement par rapport aux pattes 17 pour, circonférentiellement, s'insérer axialement entre deux pattes 17 consécutives de la coquille 12 d'entrée.

Un jonc 21 annulaire est logé axialement entre les pattes 17 de la coquille 12 d'entrée et les pattes 19 du voile 18 d'entraînement.

Le mécanisme 20 à double embrayage humide est commandé pour accoupler sélectivement ledit arbre menant à un premier arbre A1 mené et à un deuxième A2 arbre mené.

De préférence, le premier arbre A1 mené et le deuxième A2 arbre mené sont coaxiaux.

Le mécanisme 20 à double embrayage humide comporte au moins un premier embrayage E1 et un deuxième embrayage E2, qui sont respectivement de type multidisques.

Le premier arbre A1 mené est entraîné en rotation lorsque ledit premier embrayage E1 est fermé et le deuxième A2 arbre mené est entraîné en rotation lorsque ledit deuxième embrayage E2 est fermé, lesdits premier et deuxième arbres A1, A2 menés étant respectivement reliés à une boîte de vitesses équipant le véhicule automobile.

Dans le mécanisme 20 à double embrayage humide, le premier embrayage E1 sert par exemple à la fois au démarrage et à l'engagement des rapports impairs et le deuxième embrayage E2 prend alors en charge les rapports pairs et la marche arrière, en variante les rapports pris en charge par lesdits premier embrayage E1 et deuxième embrayage E2 sont inversés.

Le premier embrayage E1 est par exemple agencé axialement à l'avant du côté de la boîte de vitesses et le deuxième embrayage E2 est par exemple agencé axialement à l'arrière du côté moteur, du moyeu 14 d'entrée.

Le premier embrayage E1 et le deuxième embrayage E2 transmettent alternativement la puissance d'entrée (le couple et la vitesse) de l'arbre menant, que reçoit la coquille 12 d'entrée du système 10, à l'un des deux arbres A1, A2 menés, en fonction de l'état ouvert ou fermé de chacun des embrayages E1 et E2.

De préférence, le premier embrayage E1 et le deuxième embrayage E2 sont à l'état ouvert, encore dit « normalement ouvert », et sont actionnés sélectivement en fonctionnement par un dispositif de commande (non représenté) pour passer de l'état ouvert à l'état fermé.

Le mécanisme 20 à double embrayage humide est commandé hydrauliquement par l'intermédiaire d'un fluide sous pression, généralement de l'huile.

Pour commander sélectivement le changement d'état du premier embrayage E1 et du deuxième embrayage E2 du mécanisme 20 du système 10 de transmission, le dispositif de commande comporte au moins un arbre 22 de commande comportant des canaux 24 d'alimentation en huile, par exemple au nombre de quatre tel que représenté sur la figure 1.

Le mécanisme 20 comporte au moins un moyeu comportant des perçages radiaux qui sont chacun reliés à l'un des canaux 24 d'alimentation en huile.

De préférence, ledit au moins un moyeu est réalisé en deux parties, un premier moyeu 25A et un deuxième moyeu 25B respectivement associés au premier embrayage E1 et au deuxième embrayage E2.

Le premier moyeu 25A comporte deux perçages 26 et 27 qui sont associés à la commande du premier embrayage E1 situé axialement à l'avant et le deuxième moyeu 25B comporte également deux perçages 28 et 29 qui sont associés à la commande du deuxième embrayage E2 situé axialement à l'arrière.

En variante non représentée, ledit au moins un moyeu est un moyeu commun au premier embrayage E1 et au deuxième embrayage E2 qui est réalisé en une seule pièce, monobloc.

Le premier embrayage E1 de type multidisques comporte un piston 30 qui est mobile axialement, ici de l'avant vers l'arrière, entre une position débrayée et une position embrayée qui correspondent respectivement aux états ouvert et fermé du premier embrayage E1.

Tel que représenté sur les figures 1 et 2, le piston 30 est commandé en déplacement au moyen d'une chambre 32 de commande délimitée axialement par une face avant d'une partie radiale interne du piston 30 et par la face radiale arrière d'une pièce 34 de fermeture.

La pièce 34 de fermeture porte à son extrémité radiale externe des moyens 36 d'étanchéité qui coopèrent avec une face interne d'une partie axiale du piston 30 et à son extrémité radiale interne des moyens 38 d'étanchéité qui coopèrent avec une surface 40 axiale externe du premier moyeu 25A.

De préférence, la pièce 34 de fermeture est associée à une pièce 42 d'appui qui est bloquée axialement par un anneau 44 d'arrêt monté dans une gorge 45 du premier moyeu 25A.

Avantageusement, les efforts axiaux liés à la mise en pression de la chambre 32 de commande sont repris par la pièce 42 d'appui et non par la pièce 34 de fermeture pourtant les moyens 36 et 38 d'étanchéité.

Le piston 30 comporte à son extrémité radiale interne des moyens 46 d'étanchéité qui coopèrent avec la surface 40 axiale externe du premier moyeu 25A, lorsque le piston 30 est déplacé axialement entre les positions débrayée et embrayée par la mise en pression de la chambre 32 de commande.

La pièce 34 de fermeture de la chambre 32 de commande du piston 30 comporte, entre ses deux extrémités radiales portant les moyens d'étanchéité 36 et 38, une portion convexe qui coopère avec la face radiale avant du piston 30 axialement en vis-à-vis.

Le volume de la chambre 32 de commande comporte une partie extérieure et une partie intérieure, située radialement de part et d'autre de ladite portion convexe de la pièce 34 de fermeture.

La chambre 32 de commande est alimentée en huile par l'intermédiaire du perçage 27 qui traverse radialement le premier moyeu 25A, le perçage 27 mettant en communication ladite chambre 32 de commande avec l'un des canaux 24 d'alimentation en huile.

La chambre 32 de commande du piston 30 du premier embrayage E1 est associée à une chambre 48 d'équilibrage délimitée au moins par un piston 50 d'équilibrage.

Avantageusement, le voile 18 d'entraînement constitue le piston 50 d'équilibrage du premier embrayage E1.

Le voile 18 d'entraînement assure donc une double fonction, de transmission de la puissance d'entrée d'une part, et de piston d'équilibrage dans le fonctionnement du premier embrayage E1, d'autre part.

Plus précisément, le fonction du piston 50 d'équilibrage du premier embrayage E1 est assurée principalement par la partie radiale interne dudit voile 18.

En variante, le piston 50 d'équilibrage et le voile 18 d'entraînement sont réalisés sous la forme de deux pièces distinctes.

La chambre 48 d'équilibrage du premier embrayage E1 est délimitée axialement par la face radiale avant du piston 50 d'équilibrage formé par la partie radialement interne du voile 18 d'entraînement et par la face radiale arrière du piston 30.

La chambre 48 d'équilibrage est alimentée en huile par l'intermédiaire du perçage 26 que comporte le premier moyeu 25A.

L'étanchéité de la chambre 48 d'équilibrage est assurée radialement à l'extérieur par des moyens 52 d'étanchéité qui sont portés par le piston 30 et qui coopèrent avec la face interne d'une partie axiale du piston 50 d'équilibrage formé par le voile 18 d'entraînement.

Le piston 30 du premier embrayage E1 s'étend radialement entre la chambre 32 de commande, située axialement à l'avant, et la chambre 48 d'équilibrage, située axialement à l'arrière.

Le piston 30 du premier embrayage E1 comporte, à son extrémité radiale extérieure, une partie d'actionnement formée par des doigts 54 qui s'étendent axialement vers l'arrière pour agir sur un ensemble multidisques du premier embrayage E1.

Avantageusement, le voile 18 d'entraînement comporte des ouvertures 56 pour le passage axial desdits doigts 54 formant la partie d'actionnement du piston 30 de l'embrayage E1.

Le piston 30 est commandé pour venir serrer axialement, en position embrayée, ledit ensemble multidisques du premier embrayage E1 contre des moyens 60 de réaction.

Dans le système 10 de transmission représenté aux figures 1 et 2, le premier embrayage E1 et le deuxième embrayage E2 dudit mécanisme 20 à double embrayage humide sont axialement juxtaposés, le premier embrayage E1 et le deuxième embrayage E2 étant agencés axialement de part et d'autre desdits moyens 60 de réaction.

Lesdits moyens 60 de réaction comportent au moins un premier élément 58 de réaction et un deuxième élément 62 de réaction qui, respectivement associés au premier embrayage E1 et au deuxième embrayage E2, sont séparés axialement l'un de l'autre par un jeu « J1 ».

Avantageusement, le premier élément 58 de réaction et le deuxième élément 62 de réaction sont séparés axialement l'un de l'autre par un espace vide correspondant audit jeu « J1 ».

Grâce au jeu « J1 » axial, le premier élément 58 de réaction et le deuxième élément 62 de réaction sont libres de se déplacer axialement, indépendamment l'un de l'autre.

Avantageusement, on supprime tout risque d'interaction entre le premier élément 58 de réaction du premier embrayage E1 et le deuxième élément 62 de réaction du deuxième embrayage E2 lors du fonctionnement du mécanisme 20.

Le premier élément 58 de réaction comporte une face 59 de réaction orientée vers l'avant en direction du premier embrayage E1 et le deuxième élément 62 de réaction comporte une face 61 de réaction orientée vers l'arrière en direction du deuxième embrayage E2.

Dans le mode de réalisation représenté sur les figures, le premier élément 58 de réaction et le deuxième 62 élément de réaction sont réalisés sous la forme d'au moins deux pièces distinctes.

Par au moins deux pièces distinctes, on entend que le premier élément 58 de réaction et le deuxième 62 élément de réaction sont des pièces indépendantes l'une de l'autre et cela au moins jusqu'à l'assemblage desdits éléments 58, 62 au sein du mécanisme 20 à double embrayage humide.

Le premier élément 58 de réaction et le deuxième élément 62 de réaction sont par exemple réalisés en tôle.

En variante non représentée, le premier élément 58 de réaction et le deuxième élément 62 de réaction sont réalisés en une seule pièce, de manière à former avant assemblage un ensemble monobloc.

Le premier élément 58 de réaction et le deuxième élément 62 de réaction, réalisés en une ou au moins deux pièces, sont liés en rotation audit au moins un moyeu du mécanisme 20.

Tel que décrit précédemment, ledit au moins un moyeu est de préférence réalisé en deux parties, respectivement le premier moyeu 25A et le deuxième 25B moyeu.

En variante non représentée, ledit au moins un moyeu est réalisé en une seule pièce, monobloc.

De préférence, le premier élément 58 de réaction et le deuxième 62 élément de réaction sont liés en rotation audit au moins un moyeu, tel qu'un moyeu commun ou deux moyeux 25A et 25B, par soudage.

En variante, le premier élément 58 de réaction et le deuxième 62 élément de réaction sont liés en rotation audit au moins un moyeu, tel qu'un moyeu commun ou deux moyeux 25A et 25B, par rivetage.

Avantageusement, ledit au moins un moyeu, en une seule pièce ou en deux parties 25A, 25B, est indépendant desdits éléments 58 et 62 de réaction de manière à pouvoir notamment être réalisé dans un matériau différent de celui employé pour les éléments 58 et 62 de réaction, selon un procédé de fabrication choisi.

En variante non représentée, le premier élément 58 de réaction est réalisé en une seule pièce avec ledit premier moyeu 25A du premier embrayage E1 et le deuxième élément 62 de réaction est réalisé en une seule pièce avec ledit deuxième moyeu 25B du deuxième embrayage E2.

Le premier élément 58 de réaction et le deuxième élément 62 de réaction comportent au moins un bossage d'appui qui, convexe s'étend axialement en direction de l'ensemble multidisques de celui desdits premier et deuxième embrayages E1, E2 auquel l'élément de réaction est associé.

Le premier élément 58 de réaction comporte au moins un bossage 63 d'appui dont la face radiale avant constitue ladite face 59 de réaction.

Le deuxième élément 62 de réaction comporte au moins un bossage 65 d'appui dont la face radiale arrière constitue ladite face 61 de réaction.

Les bossages 63 et 65 d'appui sont par exemple obtenus par emboutissage desdits éléments 58 et 62 de réaction.

De préférence, ledit au moins bossage 63 d'appui du premier élément 58 de réaction et ledit au moins un bossage 65 axial d'appui du deuxième élément 62 de réaction sont situés radialement sur un même rayon par rapport à l'axe O.

Le premier élément 58 de réaction et le deuxième élément 62 de réaction sont circonférentiellement continu, de manière à former un disque.

En variante non représentée, le premier élément 58 de réaction et le deuxième élément 62 de réaction comportent au moins une partie radiale externe circonférentiellement discontinue qui est formée d'une pluralité de bras de réaction.

Selon cette variante, l'élément 58, 62 de réaction comporte de préférence une partie radiale interne circonférentiellement continue formée par un anneau, notamment pour la liaison en rotation dudit élément de réaction avec ledit au moins un moyeu 25A, 25B le supportant.

Dans une telle variante, les bras de réaction s'étendent radialement vers l'extérieur à partir de la partie radiale interne annulaire et chaque bras de réaction est séparé du bras de réaction adjacent par une fente radiale.

Les bras de réaction selon cette variante comportent avantageusement des bossages 63 et 65 d'appui portant respectivement les faces 59 et 61 de réaction.

Avantageusement, le premier élément 58 de réaction et le deuxième élément 62 de réaction séparés axialement par le jeu « J1 » comportent des moyens raidisseur pour les raidir et limiter axialement le débattement du premier élément 58 de réaction et du deuxième élément 62 de réaction.

De tels moyens raidisseur sont par exemple formés par des emboutis réalisés dans le premier élément 58 de réaction et le deuxième élément 62 de réaction, radialement en dessous des bossages 63 et 65 d'appui.

Le premier embrayage E1 et le deuxième embrayage E2 dudit mécanisme 20 à double embrayage humide sont actionnés axialement en sens opposé, soit axialement de l'avant vers l'arrière contre la face 59 pour le piston 30 du premier embrayage E1 et axialement de l'arrière vers l'avant contre la face 61 pour celui du deuxième embrayage E2.

L'ensemble multidisques du premier embrayage E1 comporte au moins des disques 64 de friction qui sont liés en rotation audit premier arbre A1 mené par un porte-disques 66 extérieur. Le porte-disques 66 extérieur forme l'élément de sortie du premier embrayage E1.

Le porte-disques 66 extérieur comporte à la périphérie radiale extérieure une extension axiale 131 qui est munie d'une denture 67 destinée à coopérer avec une denture 68 complémentaire que comporte chaque disque 64 de friction à sa périphérie radiale extérieure.

Le porte-disques 66 extérieur forme l'élément de sortie du premier embrayage E1 et comporte une extension radiale 135 et l'extension axiale 131. Selon l'invention, l'extension axiale 131 du porte disques 66 extérieur présente un décalage radial 137.

De manière avantageuse, le décalage radial 137 est orienté vers l'intérieur du porte-disques 66.

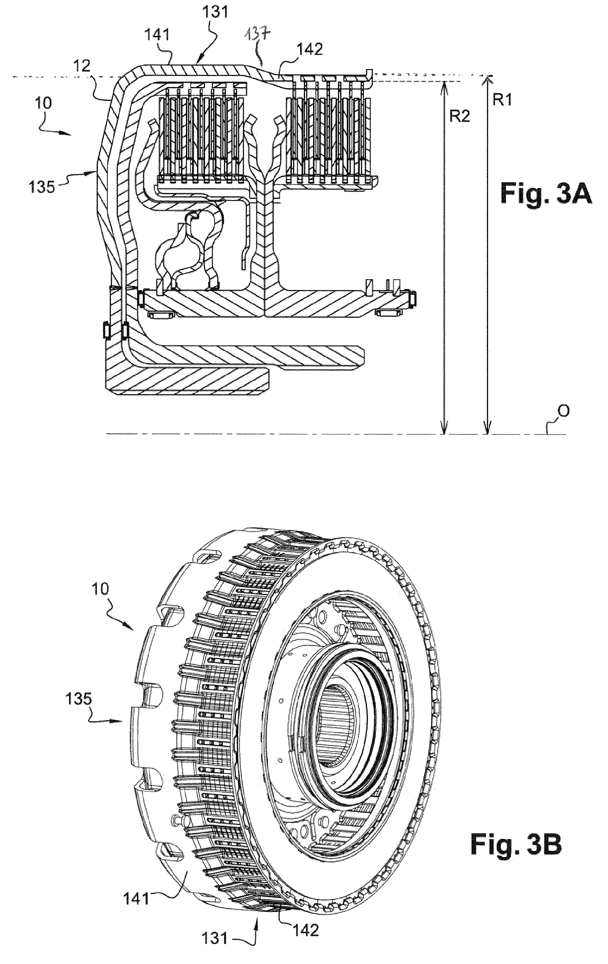

L'extension axiale 131 comporte une première partie 141 située proche de l'extension radiale 135 et une deuxième partie 142 située éloignée de l'extension radiale 135. La première partie 141 et la deuxième partie 142 s'inscrivent respectivement dans un premier cylindre et dans un deuxième cylindre. Selon l'invention, le rayon R1 de la première partie est supérieur au rayon R2 de la deuxième partie. Le rayon R1 correspond à un rayon minimal de la première partie et le rayon R2 correspond à un rayon minimal de la deuxième partie ou rayon intérieur de la denture 67.Selon un premier mode de réalisation de l'invention figures 3A et 3B, la première partie 141 et la deuxième partie 142 sont formées d'une seule pièce. La première partie 141 et la deuxième partie 142 sont agencées de telle manière que l'extension axiale 131 comporte localement une section sensiblement de forme tronconique 137. De part et d'autre de cette section tronconique s'étend le reste de l'extension axiale 131 selon un axe sensiblement parallèle à l'axe de rotation O. La section de forme tronconique 137 est agencée de telle manière qu'elle se rétrécie en s'éloignant de l'extension radiale 135.

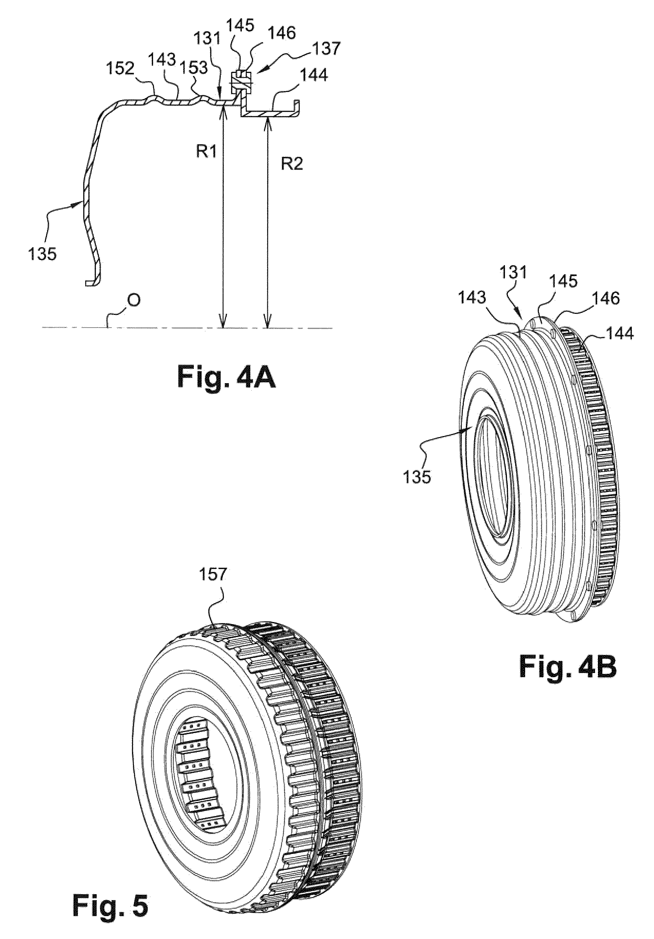

Selon un deuxième mode de réalisation figures 4A et 4B, l'extension axiale 131 comporte une première partie 143 et une deuxième partie 144 distinctes l'une de l'autre. La première partie 143 est formée continûment avec l'extension radiale 135. La première partie 143 et la deuxième partie 144 sont liées en rotation par rivetage.

Dans cet exemple, une des extrémités de chacune des parties 143 et 144 forme une collerette radiale respectivement 145 et 146 au moins partiellement périphérique. Les deux parties 143 et 144 sont liées en rotation par liaison des deux collerettes 144 et 146 l'une avec l'autre. Elles sont accolées l'une à l'autre avec un décalage radial de la deuxième partie 144 par rapport à la première partie 142 avant d'être rivetées.

La première partie 142 et la deuxième partie 144 pourraient être soudées l'une à l'autre.

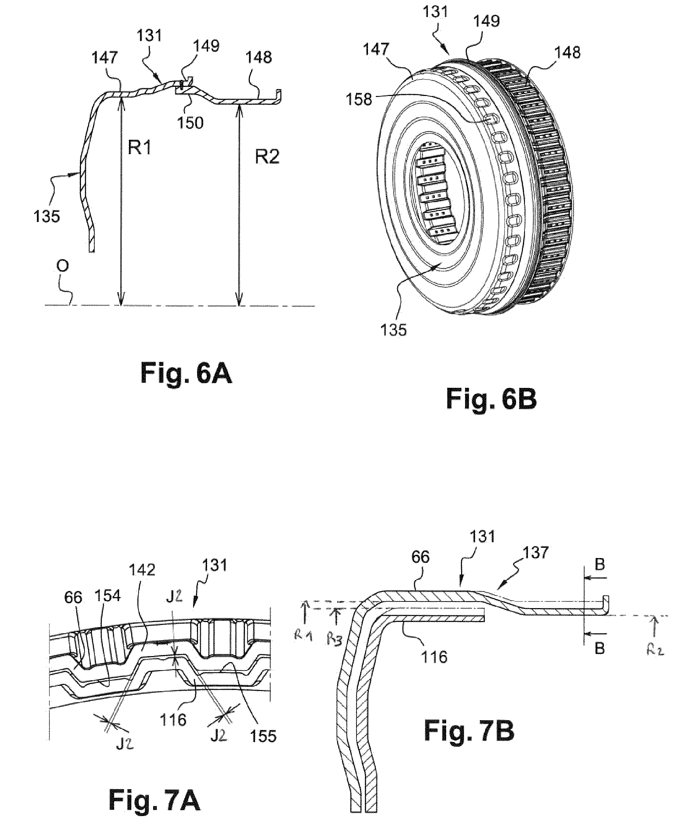

Les collerettes 145 et 146 formées respectivement par l'extrémité de la partie 143 et l'extrémité de la partie 144 peuvent être chacune inclinées de telle sorte à former une liaison globalement de forme tronconique comme dans l'exemple selon le premier mode de réalisation figures 3A, 7B.

Selon un troisième mode de réalisation de l'invention figures 6A et 6B, l'extension axiale 131 comporte une première partie 147 et une deuxième partie 148. Une des extrémités de chacune des parties 147 et 148 forme un bord périphérique axial respectivement 149 et 150. Les parties 147 et 148 sont liées en rotation l'une à l'autre par décalage radial de la deuxième partie 148 par rapport à la première partie 147 et par superposition du bord périphérique axial 149 et du bord périphérique axial 150 l'un sur l'autre. De préférence, les deux bords périphériques 149 et 150 sont soudés l'un avec l'autre.

De la même manière que précédemment, le bord périphérique axial 149 et le bord périphérique axial 150 peuvent également être configurés de telle manière à ce que la liaison entre la première partie 147 et la deuxième partie 148 présente une forme de section globalement tronconique comme pour les exemples illustrés en figures 3A et 7B.

Figures 4A,4B, l'extension axiale 131 peut présenter au moins un moyen raidisseur 152,153 pour rigidifier le porte-disques 66 extérieur. Dans l'exemple illustré figures 4A et 4B, deux déformations locales telles que 152,153 s'étendent au moins partiellement sur le pourtour périphérique de ladite extension axiale 131.

Chaque déformation peut être une forme localisée s'étendant en direction opposée à l'axe O ou bien en direction de l'axe O.

La figure 5 illustre une autre variante de porte-disque 66 du premier embrayage avec une première partie présentant des formes cannelées 157.

Bien que non représenté dans les figures 1, 2, 3A, 3B, 6A, 6B, 7A et 7B, les déformations localisées telles qu'illustrées en 152,153 dans les figures 4A,4B ou en 157 en figure 5, cet embouti 152,153 peut également être formé par chacune des extensions axiales telles qu'illustrées dans ces autres modes de réalisation de l'invention.

Le porte-disques 66 extérieur comporte des trous radiaux répartis circonférentiellement dans ladite partie axiale munie de la denture 67 et destinés à être traversés par l'huile introduite dans l'ensemble multidisques du premier embrayage E1.

Le porte-disques 66 extérieur est lié en rotation par engrènement avec les disques 64 de friction et par une liaison cannelée avec ledit premier arbre A1 mené.

Le porte-disques 66 extérieur comporte un moyeu 70 de sortie qui s'étend axialement et comporte radialement à l'intérieur des cannelures 72 axiales qui engrènent avec des cannelures 73 complémentaires du premier arbre A1 mené.

Le porte-disques 66 extérieur présente globalement une forme en « L » dont l'extrémité radiale intérieure, à l'opposé de la denture 67, est solidaire du moyeu 70 de sortie.

De préférence, le porte-disques 66 extérieur et le moyeu 70 de sortie sont fixés ensemble par soudage, en variante par rivetage.

Les disques 64 de friction comportent chacun sur leurs faces radiales axialement opposées, respectivement avant et arrière, une garniture 74 de friction.

L'ensemble multidisques du premier embrayage E1 comporte des flasques 76 qui sont munis à leur périphérie radiale interne d'une denture 78 pour les lier en rotation avec un porte-disques 80 intérieur.

Le porte-disques 80 intérieur comporte à son extrémité radiale externe une partie axiale comportant une denture 82 externe qui, complémentaire, engrène avec la denture 78 interne de chacun des flasques 76 pour les lier en rotation sans jeu.

Le porte-disques 80 intérieur comporte des trous 'non représentés) radiaux répartis circonférentiellement dans ladite partie axiale munie de la denture 82 et destinés à être traversés par l'huile introduite dans l'ensemble multidisques du premier embrayage E1.

Les disques 64 de friction sont, unitairement, axialement interposés entre deux flasques 76 successifs. Chacune des garnitures 74 de friction d'un des disques 64 de friction coopère en position embrayée avec l'une des faces radiale des flasques 76 agencés axialement de part et d'autre, en avant et en arrière, dudit disque 64 de friction.

L'ensemble multidisques du premier embrayage E1 comporte axialement un flasque 76 à chacune de ses extrémités, respectivement un flasque 76 avant dont la face radiale avant est destinée à coopérer en position embrayée avec les doigts 54 formant la partie d'actionnement du piston 30 et un flasque 76 arrière dont la face radiale arrière est destinée à coopérer avec la face 59 de l'élément 58 de réaction des moyens 60 de réaction.

Le premier embrayage E1 comporte des moyens élastiques de rappel pour rappeler automatiquement le piston 30 en position débrayée, correspondant à un état ouvert de l'embrayage.

De préférence, les moyens élastiques de rappel du piston 30 sont formés par des rondelles élastiques, telles que des rondelles de type « Onduflex » (marque déposée).

Les rondelles élastiques sont interposées axialement entre les flasques 76 et agencées radialement à l'intérieur des disques 64 de friction, en dessous des garnitures 74 de friction. Chaque rondelle élastique est axialement en appui contre la face radiale arrière d'un flasque 76 et contre la face radiale avant d'une autre flasque 76 axialement adjacent.

Les moyens élastiques de rappel sollicitent axialement les flasques 76 et ce faisant facilite la libération des disques 64 de friction et le rappel du piston 30 vers la position débrayée.

En variante non représentée, les moyens de rappel du piston d'un embrayage sont formés par au moins un ressort qui est par exemple agencé radialement entre l'axe O et le porte-disques 80 intérieur pour rappeler automatiquement le piston 30 vers la position débrayée.

Pour transmettre directement la puissance d'entrée, le mécanisme 20 à double embrayage humide comporte des moyens de liaison qui, pour le premier embrayage E1, lient axialement sans jeu au moins le voile 18 d'entraînement, le porte-disques 80 intérieur et les moyens 60 de réaction.

Lorsqu'en variante, le voile 18 d'entraînement et le piston 50 d'équilibrage sont réalisés en deux pièces distinctes, les moyens de liaison lient alors avantageusement également ledit piston 50 d'équilibrage axialement sans jeu avec le voile 18 d'entraînement, le porte-disques 80 intérieur et les moyens 60 de réaction.

Le piston 50 d'équilibrage du premier embrayage E1 étant formé par le voile 18 d'entraînement, le mécanisme 20 comporte une pièce en moins avec pour avantages notamment un moindre coût, une simplification et une compacité axiale accrue.

De préférence, les moyens de liaison sont réalisés par rivetage au moyen de rivets 85. En variante non représentée, les moyens de liaison sont réalisés par soudage, notamment par soudage laser par transparence.

Le voile 18 d'entraînement comporte des emboutis 86 qui, répartis circonférentiellement, font saillis axialement vers l'arrière par rapport à la face radiale arrière du voile 18 d'entraînement formant le piston 50 d'équilibrage.

Les emboutis 86 entourent chacun un trou destiné à être traversé axialement par l'un des rivets 85 formant lesdits moyens de liaison.

De préférence, les rivets 85 formant les moyens de liaison sont communs au premier embrayage E1 et au deuxième embrayage E2 qui va maintenant être décrit.

En variante, le mécanisme 20 comporte au moins deux séries de rivets distincts pour former les moyens de liaison, des premiers rivets associés au premier embrayage E1 et des deuxièmes rivets associés au deuxième embrayage E2.

Le deuxième embrayage E2 du mécanisme 20 à double embrayage humide du système 10 de transmission est de conception similaire à celle du premier embrayage E1, le deuxième embrayage E2 étant de type multidisques.

Avantageusement, on se reportera au besoin pour la description du deuxième embrayage E2 à la description détaillée du premier embrayage E1 donnée précédemment.

Le deuxième embrayage E2 comporte un piston 90 qui est mobile axialement, ici de l'arrière vers l'avant, entre une position débrayée et une position embrayée correspondant respectivement aux états ouvert et fermé du deuxième embrayage E2 du mécanisme 20.

Le piston 30 du premier embrayage E1 et le piston 90 du deuxième embrayage E2 dudit mécanisme 20 à double embrayage humide se déplacent axialement en sens opposé pour passer par exemple de la position débrayée à la position embrayée.

Le piston 90 du deuxième embrayage E2 est commandé en déplacement au moyen d'une chambre 92 de commande délimitée axialement par une face arrière d'une partie radiale intérieure du piston 90 et par la face radiale avant d'une pièce 94 de fermeture.

La chambre 92 de commande est alimentée sélectivement en huile par le perçage 29 traversant radialement le deuxième moyeu 25B et relié à l'un des canaux 24 d'alimentation de l'arbre 22 de commande.

La pièce 94 de fermeture comporte à son extrémité radiale externe des moyens 96 d'étanchéité qui coopèrent avec une face interne d'une partie axiale du piston 90 et, à son extrémité radiale interne, des moyens 98 d'étanchéité qui coopèrent avec une surface 100 externe du deuxième moyeu 25B.

La surface 100 associée au deuxième embrayage E2 est située axialement en arrière par rapport aux moyens 60 de réaction agencés entre lesdits embrayages E1 et E2, soit axialement à l'opposé de la surface 40 associée au piston 30 du premier embrayage E1.

De préférence, la pièce 94 de fermeture est associée à une pièce 102 d'appui qui est bloquée axialement par un anneau 104 d'arrêt monté dans une gorge 105 du deuxième moyeu 25B.

Le piston 90 comporte à son extrémité radiale interne des moyens 106 d'étanchéité qui coopèrent avec la surface 100 externe du deuxième moyeu 25B, lorsque le piston 90 est déplacé axialement entre les positions débrayée et embrayée par la mise en pression de la chambre 92 de commande.

Comme la pièce 34 de fermeture pour le premier embrayage E1, la pièce 94 de fermeture est conformée, globalement entre ses extrémités radiales portant les moyens 96 et 98 d'étanchéité, pour venir axialement coopérer avec la face radiale arrière du piston 90.

La chambre 92 de commande est associée à une chambre 108 d'équilibrage délimitée par au moins un piston 110 d'équilibrage. La chambre 108 d'équilibrage est alimentée par l'un des canaux 24 d'alimentation en huile à travers le perçage 28 réalisée dans le deuxième moyeu 25B.

Par comparaison avec le piston 50 d'équilibrage du premier embrayage E1 formé par le voile 18 d'entraînement, le piston 110 d'équilibrage du deuxième embrayage E2 est une pièce distincte.

La chambre 108 d'équilibrage est délimitée axialement par la face radiale arrière du piston 110 d'équilibrage et par la face radiale avant du piston 90.

L'étanchéité de la chambre 108 d'équilibrage est assurée radialement à l'extérieur par de moyens 112 d'étanchéité qui sont portés par le piston 90 et qui coopèrent avec la face interne d'une partie axiale du piston 110 d'équilibrage.

La partie radiale interne du piston 90 s'étend radialement entre la chambre 92 de commande, située axialement en arrière, et la chambre 108 d'équilibrage, située axialement en avant.

Le piston 90 du deuxième embrayage E2 comporte, à son extrémité radiale extérieure, une partie d'actionnement 115 formée par un bossage qui s'étend axialement vers l'avant en direction d'un ensemble multidisques du deuxième embrayage E2.

La partie d'actionnement 115 du piston 90 du deuxième embrayage E2 est circonférentiellement continue, en variante discontinue.

La partie d'actionnement formée par les doigts 54 du piston 30 du premier embrayage E1 et la partie d'actionnement 115 du piston 90 du deuxième embrayage E2 dudit mécanisme 20 sont situées radialement sur un même rayon centré sur l'axe O du système 10.

Avantageusement, les parties d'actionnement des pistons 30 et 90 sont situées sur le même rayon centré sur l'axe O que la partie sommitale des bossages 63 et 65 d'appui formant les faces 59 et 61 de réaction.

Le piston 30 du premier embrayage E1 et le piston 90 du deuxième embrayage E2 appliquent chacun un effort de serrage sur l'ensemble multidisques qui leur est associé selon la direction axiale mais suivant un sens opposé, comme est opposée la réaction s'effectuant sur les éléments 58 et 62 de réaction.

L'ensemble multidisques du deuxième embrayage E2 comporte des disques 114 de friction qui sont liés en rotation au deuxième arbre A2 mené par un porte-disques 116 extérieur formant l'élément de sortie de l'embrayage E2.

Le porte-disques 116 extérieur comporte à la périphérie radiale extérieure une extension axiale 151 qui est munie d'une denture 117 interne destinée à coopérer avec une denture 118 externe que comporte chacun des disques 114 de friction.

Le porte-disques 116 extérieur comporte des trous radiaux répartis circonférentiellement dans ladite partie axiale munie de la denture 117 et destinés à être traversés par l'huile introduite dans l'ensemble multidisques du deuxième embrayage E2.

Le porte-disques 116 extérieur est lié en rotation par engrènement avec les disques 114 de friction et par une liaison cannelée avec ledit deuxième arbre A2 mené.

Le porte-disques 116 extérieur comporte un moyeu 120 de sortie qui s'étend axialement et comporte radialement à l'intérieur des cannelures 122 qui engrènent avec des cannelures 123 complémentaires du deuxième arbre A2 mené.

De préférence, ledit porte-disques 116 et le moyeu 120 de sortie sont fixées ensemble par soudage, en variante par rivetage.

Les disques 114 de friction comportent chacun sur leurs faces radiales axialement opposées, respectivement avant et arrière, une garniture 124 de friction.

Dans l'exemple figures 1 et 2, le porte-disques 116 extérieur est logé à l'intérieur du porte-disques 66 extérieur. Plus précisément, le porte-disque 116 est logé à l'intérieur de la première partie 141,143,147 de l'extension axiale 131 (figures 3A,4A,6A).

Figures 7A et 7B, le porte-disques 66 extérieur et le porte-disques 116 extérieur sont agencés l'un par rapport à l'autre avec un jeu « J2 ». Ce jeu « J2 » est calculé pour que la denture 67 du porte-disques 66 extérieur puisse glisser sans frottement sur la denture 117 complémentaire du porte-disques 116 extérieur au moment du montage.

Le jeu « J2 » est mesuré perpendiculairement entre une face interne 154 de la denture 67 de la deuxième partie 142 de l'extension axiale 131 du porte-disques 66 extérieur et une face externe 155 de la denture 117 de l'extension axiale 151 du porte-disques 116 extérieur.

Autrement dit, le rayon R2 de la deuxième partie 141 est calculé pour être réduit à une valeur juste suffisante pour créer le jeu J2 et permettre le passage sans frottement du porte-disques 66 extérieur sur le porte-disques 116 extérieur.

Comme illustré sur la figure 7B, l'extension axiale 151 du porte-disques 116 extérieur définie sur son contour extérieur un rayon R3 maximal.

Selon l'invention, le rayon R3 défini par l'extension axiale 151 est supérieur au rayon R2 de la deuxième partie de l'extension 131.

Dans un mode de réalisation, le rayon R3 est compris entre le rayon R1 et le rayon R2.

L'ensemble multidisques du deuxième embrayage E2 comporte des flasques 126 qui sont munis à leur périphérie radiale interne d'une denture 128 pour les lier en rotation avec un porte-disques 130 intérieur.

Le porte-disques 130 intérieur comporte à son extrémité radiale externe une partie axiale comportant une denture 132 externe qui engrène avec la denture 128 interne de chacun des flasques 126 pour les lier en rotation sans jeu.

Le porte-disques 130 intérieur comporte des trous radiaux répartis circonférentiellement dans ladite partie axiale munie de la denture 132 et destinés à être traversés par l'huile introduite dans l'ensemble multidisques du deuxième embrayage E2.

Les disques 114 de friction sont, unitairement, axialement interposés entre deux flasques 126 consécutifs.

Chacune des garnitures 124 de friction d'un des disques 114 de friction coopère en position embrayée avec une face radiale de l'un des deux flasques 126 situés axialement de part et d'autre.

L'ensemble multidisques du deuxième embrayage E2 comporte axialement un flasque 126 à chacune de ses extrémités, respectivement un flasque 126 arrière dont la face radiale arrière est destinée à coopérer, en position embrayée, avec la partie 115 d'actionnement du piston 90 et un flasque 126 avant dont la face radiale avant est destinée à coopérer avec la face 61 arrière de l'élément 62 de réaction.

Le deuxième embrayage E2 comporte des moyens 134 élastiques de rappel pour rappeler automatiquement le piston 90 en position débrayée, correspondant à un état ouvert de l'embrayage.

De préférence et comme pour le premier embrayage E1, les moyens 134 élastiques de rappel du piston 90 sont formés par des rondelles élastiques, telles que des rondelles de type « Onduflex » (marque déposée).

Pour transmettre directement la puissance d'entrée, le mécanisme 20 à double embrayage humide comporte des moyens de liaison qui, pour le deuxième embrayage E2, lient axialement sans jeu au moins le piston 110 d'équilibrage, le porte-disques 130 intérieur du deuxième embrayage E2 et lesdits moyens 60 de réaction.

Avantageusement, les moyens de liaison du deuxième embrayage E2 sont réalisés par rivetage.

De préférence, lesdits moyens de liaison du deuxième embrayage E2 sont formés par des rivets 85 communs avec le premier embrayage E1 de sorte que lesdits moyens de liaison sont formés par les seuls rivets 85.

Tel que représenté sur la figure 1, les moyens de liaison du mécanisme 20 à double embrayage humide sont agencés axialement entre le piston 30 du premier embrayage E1 et le piston 90 du deuxième embrayage E2.

Les moyens de liaison lient axialement sans jeu au moins ledit voile 18 d'entraînement, le porte-disques 80 intérieur du premier embrayage E1, le porte-disques 130 intérieur du deuxième embrayage E2 et ledit au moins un moyeu portant les moyens 60 de réaction formés par les éléments 58 et 62 de réaction.

Dans ce mode de réalisation, les rivets 85 lient axialement sans jeu et en rotation le premier moyeu 25A et le deuxième moyeu 25B.

Les rivets 85 formant les moyens de liaison permettent de lier simultanément le voile 18 d'entraînement tant au premier embrayage E1 qu'au deuxième embrayage E2 du mécanisme et de transmettre directement la puissance d'entrée délivrée au système 10 par l'arbre menant.

De préférence, les moyens de liaison formés par les rivets 85 sont utilisés pour assurer la fixation du piston 50 d'équilibrage du premier embrayage E1 formé ici par le voile 18 et du piston 110 d'équilibrage du deuxième embrayage E2.

Avantageusement, lesdits moyens de liaison lient également axialement sans jeu le piston 50 d'équilibrage du premier embrayage E1 et le piston 110 d'équilibrage du deuxième embrayage E2 du mécanisme 20.

Les éléments 58 et 62 de réaction sont interposés axialement entre le porte-disques 80 intérieur du premier embrayage E1 et le porte-disques 130 intérieur du deuxième embrayage E2 pour transmettre directement la puissance d'entrée au mécanisme 20.

Comme le voile 18 d'entraînement formant le piston 50 d'équilibrage du premier embrayage E1, le piston 110 d'équilibrage du deuxième embrayage E2 comporte des emboutis 136 qui entourent chacun un trou 138 de passage d'un des rivets 85 formant les moyens de liaison.

Lorsqu'en variante, le piston 50 d'équilibrage est une pièce distincte du voile 18 d'entraînement, le piston 50 d'équilibrage est alors avantageusement également lié axialement sans jeu par les rivets 85 afin d'être maintenu en position.

Les moyens de liaison formés par les rivets 85 ne font cependant pas obstacle à la circulation de l'huile, radialement de l'intérieur vers l'extérieur, destinée notamment à lubrifier les garnitures 74 et 124 de friction des embrayages E1 et E2.
les emboutis 86 du voile 18 formant le piston 50 d'équilibrage, comme les emboutis 136 du piston 110 d'équilibrage, sont circonférentiellement discontinus.

Tel que représenté sur la figure 2, il existe grâce aux emboutis 86 un jeu axial entre la face radiale arrière du piston 50 d'équilibrage formé par le voile 18 et la face radiale avant du porte-disques 80 intérieur permettant une circulation radiale de l'huile vers l'ensemble multidisques du premier embrayage E1.

Avantageusement, des passages d'huile sont ainsi ménagés pour permettre une circulation d'huile, radialement vers l'extérieur, au niveau des moyens de liaison formés par les rivets 85.

L'huile circule, radialement de l'intérieur vers l'extérieur suivant des flèches représentées notamment sur la figure 2, en empruntant des passages F radiaux d'huile délimités circonférentiellement par deux emboutis 86 consécutifs du voile 18 formant le piston 50 d'équilibrage du premier embrayage E1 ou deux emboutis 136 circonférentiellement consécutifs du piston 110 d'équilibrage du deuxième embrayage E2.

Pour le premier embrayage E1, le flux d'huile traverse ensuite radialement des trous du porte-disques 80 intérieur pour circuler entre les disques 74 de friction et les flasques 76 de l'ensemble multidisques de E1 avant de traverser les trous radiaux du porte-disques 66 extérieur.

Pour le deuxième embrayage E2, le flux d'huile traverse radialement des trous du porte-disques 130 intérieur pour circuler entre les disques 114 de friction et les flasques 126 de l'ensemble multidisques de E2 avant de traverser les trous radiaux du porte-disques 116 extérieur.

Lorsque les moyens de liaison sont réalisés par rivetage, l'étanchéité de la chambre 48 d'équilibrage du premier embrayage E1 est assurée autour des trous par contact entre une face annulaire, radialement plane, qui est formée à la faveur de l'embouti 86 et entoure le trou.

Une fois le rivetage effectué pour lier axialement les pièces ensemble, ladite face annulaire coopère avec une portion de la face radiale plane entourant le trou du porte-disques 80 intérieur.

L'étanchéité de la chambre 108 d'équilibrage du deuxième embrayage E2 est assurée autour de trous par contact entre une face annulaire, radialement plane, qui est formée à la faveur de l'embouti 136 et entoure le trou.

Une fois le rivetage effectué pour lier axialement les pièces ensemble, ladite face annulaire coopère avec une portion de la face radiale plane entourant le trou du porte-disques 130 intérieur.

Des ouvertures 158 peuvent également être prévues sur l'extension axiale 131 de chacun des modes de réalisation de l'invention figures 3A,3B,4A,4B,5,7A,7B. Un exemple de telles ouvertures 158 est illustré en figure 6B. De telles ouvertures participent également à la réduction de l'inertie de l'ensemble 10.

## Revendications

1. Mécanisme (20) à double embrayage humide pour un système (10) de transmission, notamment de véhicule automobile, comportant autour d'un axe (O) de rotation au moins un premier embrayage (E1) et un deuxième embrayage (E2) respectivement de type multidisques, le premier embrayage (E1) comportant au moins un premier piston (30) et le deuxième embrayage (E2) comportant au moins un deuxième piston (90), lesdits premier et deuxième pistons (30, 90) étant déplacés axialement en sens opposé pour venir, en position embrayée, serrer un ensemble multidisques contre des moyens (60) de réaction qui sont interposés axialement entre l'ensemble multidisques de chacun desdits premier et deuxième embrayages (E1, E2), ledit ensemble multidisques du premier embrayage E1 et du deuxième embrayage E2 comportant respectivement des disques (64,114) de friction qui sont liés en rotation respectivement au premier arbre A1 et au deuxième arbre A2 mené par respectivement un porte-disques (66,116) extérieur formant l'élément de sortie de l'embrayage (E1,E2), chacun desdits porte-disques extérieur comportant une extension radiale (135,156) et une extension axiale (131,151), l'extension axiale d'au moins l'un desdits porte-disques extérieur présentant un décalage radial (137), **caractérisé en ce que** l'extension axiale (131) du porte-disques extérieur du premier embrayage comporte une première partie (141) et une deuxième partie (142) agencées de telle manière que l'extension axiale (131) comporte localement une section de forme tronconique (137), la section de forme tronconique (137) étant agencée de telle manière qu'elle se rétrécie en s'éloignant de l'extension radiale (135).

2. Mécanisme selon la revendication 1, dans lequel le porte-disques extérieur (116) du deuxième embrayage est logé à l'intérieur du porte-disques extérieur (66) du premier embrayage, le porte-disques extérieur du premier embrayage comportant ladite extension axiale (131) avec le décalage radial.

3. Mécanisme selon l'une des revendications 1 à 2, dans lequel l'extension axiale du porte-disques extérieur présentant un décalage axial comporte une première partie (141,143,147) et une deuxième partie (142,144,148) s'inscrivant chacune respectivement dans un premier cylindre et dans un deuxième cylindre, le rayon R1 de la première partie étant supérieur au rayon R2 de la deuxième partie.

4. Mécanisme selon la revendication 3, dans lequel la première partie et la deuxième partie forment une seule pièce.

5. Mécanisme selon la revendication 3, dans lequel la première partie et la deuxième partie forment chacune une pièce distincte, lesdites parties étant liées en rotation, par exemple par soudage ou rivetage.

6. Mécanisme selon la revendication 5, dans lequel une extrémité de la première partie (143) et une extrémité de la deuxième partie (144) forment chacune une collerette radiale (145,146), la collerette de la première partie et la collerette de la deuxième partie étant liées en rotation l'une avec l'autre.

7. Mécanisme selon la revendication 5, dans lequel une extrémité de la première partie (147) et une extrémité de la deuxième partie (148) forment chacune un bord périphérique (149,150) s'étendant axiallement, le bord périphérique de la première partie et le bord périphérique de la deuxième partie étant liés en rotation l'un avec l'autre par superposition de leur bord périphérique respectif.

8. Mécanisme selon l'une des revendications 3 à 7, dans lequel le rayon R2 de la deuxième partie est réduit à une valeur correspondant à un jeu J mesuré entre les deux porte-disques extérieur, à l'endroit de la deuxième partie de l'extension axiale, le jeu J étant suffisant pour permettre le glissement d'un des porte-disques extérieur sur l'autre des porte-disques extérieur lors du montage.

9. Mécanisme selon l'une des revendications 1 à 8, dans lequel l'extension axiale du porte-disques extérieur comporte au moins un moyen raidisseur (152,153,157) pour rigidifier ladite extension.

10. Mécanisme selon la revendication 9, dans lequel ladite extension axiale forme au moins une déformation locale (152,153) s'étendant en direction opposée à l'axe de rotation.

11. Mécanisme selon la revendication 10, dans lequel la déformation locale est au moins partiellement annulaire.

12. Mécanisme selon l'une des revendications 9 à 11, dans lequel l'extension axiale comporte une surface externe périphérique cannelée.

13. Mécanisme selon l'une des revendications 1 à 12, dans lequel l'extension axiale comporte au moins une ouverture (158).

## Patentansprüche

1. Mechanismus (20) mit nasser Doppelkupplung für ein Getriebe (10), insbesondere für ein Kraftfahrzeug, der um eine Drehachse (0) herum mindestens eine erste Kupplung (E1) und eine zweite Kupplung (E2) je von der Art Mehrscheibenkupplung aufweist, wobei die erste Kupplung (E1) mindestens einen ersten Kolben (30) und die zweite Kupplung (E2) mindestens einen zweiten Kolben (90) aufweist, wobei der erste und der zweite Kolben (30, 90) axial in Gegenrichtung bewegt werden, um in der eingekuppelten Stellung eine Mehrscheibeneinheit gegen Reaktionseinrichtungen (60) zu klemmen, die axial zwischen der Mehrscheibeneinheit jeder der ersten und zweiten Kupplungen (E1, E2) eingefügt sind, wobei die Mehrscheibeneinheiten der ersten Kupplung E1 und der zweiten Kupplung E2 je Reibscheiben (64, 114) aufweisen, die mit der ersten Welle A1 und der zweiten Abtriebswelle A2 durch je einen äußeren Scheibenträger (66, 116) in Drehung verbunden sind, der das Ausgangselement der Kupplung (E1, E2) bildet, wobei jeder der äußeren Scheibenträger eine radiale Ausdehnung (135, 156) und eine axiale Ausdehnung (131, 151) aufweist, wobei die axiale Ausdehnung mindestens eines der äußeren Scheibenträger einen radialen Versatz (137) aufweist, **dadurch gekennzeichnet, dass** die axiale Ausdehnung (131) des äußeren Scheibenträgers der ersten Kupplung einen ersten Teil (141) und einen zweiten Teil (142) aufweist, die so eingerichtet sind, dass die axiale Ausdehnung (131) lokal einen kegelstumpfförmigen Querschnitt (137) aufweist, wobei der kegelstumpfförmige Querschnitt (137) so eingerichtet ist, dass er sich bei Entfernung von der radialen Ausdehnung (135) verjüngt.

2. Mechanismus nach Anspruch 1, wobei der äußere Scheibenträger (116) der zweiten Kupplung innerhalb des äußeren Scheibenträgers (66) der ersten Kupplung untergebracht ist, wobei der äußere Scheibenträger der ersten Kupplung die axiale Ausdehnung (131) mit dem radialen Versatz aufweist.

3. Mechanismus nach einem der Ansprüche 1 bis 2, wobei die axiale Ausdehnung des äußeren Scheibenträgers, die einen axialen Versatz aufweist, einen ersten Teil (141, 143, 147) und einen zweiten Teil (142, 144, 148) aufweist, die in einem ersten Zylinder bzw. einem zweiten Zylinder liegen, wobei der Radius R1 des ersten Teils größer als der Radius R2 des zweiten Teils ist.

4. Mechanismus nach Anspruch 3, wobei der erste Teil und der zweite Teil ein einziges Bauteil bilden.

5. Mechanismus nach Anspruch 3, wobei der erste Teil und der zweite Teil je ein einzelnes Bauteil bilden, wobei die Teile zum Beispiel durch Schweißen oder Vernieten in Drehung verbunden sind.

6. Mechanismus nach Anspruch 5, wobei ein Ende des ersten Teils (143) und ein Ende des zweiten Teils (144) je einen radialen Kragen (145, 146) bilden, wobei der Kragen des ersten Teils und der Kragen des zweiten Teils in Drehung miteinander verbunden sind.

7. Mechanismus nach Anspruch 5, wobei ein Ende des ersten Teils (147) und ein Ende des zweiten Teils (148) je einen sich axial erstreckenden Umfangsrand (149, 150) bilden, wobei der Umfangsrand des ersten Teils und der Umfangsrand des zweiten Teils durch Überlagerung ihres jeweiligen Umfangsrands in Drehung miteinander verbunden sind.

8. Mechanismus nach einem der Ansprüche 3 bis 7, wobei der Radius R2 des zweiten Teils auf einen Wert entsprechend einem Spiel J reduziert ist, das zwischen den zwei äußeren Scheibenträgern an der Stelle des zweiten Teils der axialen Ausdehnung gemessen wird, wobei das Spiel J ausreichend ist, um bei der Montage das Gleiten eines der äußeren Scheibenträger auf dem anderen der äußeren Scheibenträger zu erlauben.

9. Mechanismus nach einem der Ansprüche 1 bis 8, wobei die axiale Ausdehnung des äußeren Scheibenträgers mindestens eine Versteifungseinrichtung (152, 153, 157) aufweist, um die Ausdehnung zu versteifen.

10. Mechanismus nach Anspruch 9, wobei die axiale Ausdehnung mindestens eine lokale Verformung (152, 153) bildet, die sich in Gegenrichtung zur Drehachse erstreckt.

11. Mechanismus nach Anspruch 10, wobei die lokale Verformung zumindest teilweise ringförmig ist.

12. Mechanismus nach einem der Ansprüche 9 bis 11, wobei die axiale Ausdehnung eine geriffelte äußere Umfangsfläche aufweist.

13. Mechanismus nach einem der Ansprüche 1 bis 12, wobei die axiale Ausdehnung mindestens eine Öffnung (158) aufweist.

## Claims

1. Wet dual-clutch mechanism (20) for a transmission system (10), in particular of a motor vehicle, comprising, about an axis (0) of rotation, at least a first clutch (E1) and a second clutch (E2) respectively of the multi-disc type, the first clutch (E1) comprising at least a first piston (30) and the second clutch (E2) comprising at least a second piston (90), the said first and second pistons (30, 90) being moved axially in opposite directions in order, in the engaged position, to clamp a multi-disc assembly against reaction means (60) which are interposed axially between the multi-disc assembly of each of the said first and second clutches (E1, E2), the said multi-disc assembly of the first clutch E1 and of the second clutch E2 respectively comprising friction discs (64, 114) which are rotationally connected respectively to the first driven shaft A1 and to the second driven shaft A2 by respectively an outer disc carrier (66, 116) forming the output element of the clutch (E1, E2), each of the said outer disc carriers comprising a radial extension (135, 156) and an axial extension (131, 151), the axial extension of at least one of the said outer disc carriers having a radial offset (137), **characterized in that** the axial extension (131) of the outer disc carrier of the first clutch comprises a first portion (141) and a second portion (142) which are arranged in such a way that the axial extension (131) comprises locally a section of frustoconical shape (137), the section of frustoconical shape (137) being arranged in such a way that it narrows with increasing distance from the radial extension (135).

2. Mechanism according to Claim 1, in which the outer disc carrier (116) of the second clutch is housed inside the outer disc carrier (66) of the first clutch, the outer disc carrier of the first clutch comprising the said axial extension (131) with the radial offset.

3. Mechanism according to either of Claims 1 and 2, in which the axial extension of the outer disc carrier having an axial offset comprises a first portion (141, 143, 147) and a second portion (142, 144, 148) each inscribed respectively within a first cylinder and within a second cylinder, the radius R1 of the first portion being greater than the radius R2 of the second portion.

4. Mechanism according to Claim 3, in which the first portion and the second portion form a single part.

5. Mechanism according to Claim 3, in which the first portion and the second portion each form a separate part, the said portions being rotationally connected, for example by welding or riveting.

6. Mechanism according to Claim 5, in which an end of the first portion (143) and an end of the second portion (144) each form a radial flange (145, 146), the flange of the first portion and the flange of the second portion being rotationally connected to one another.

7. Mechanism according to Claim 5, in which an end of the first portion (147) and an end of the second portion (148) each form a peripheral edge (149, 150) extending axially, the peripheral edge of the first portion and the peripheral edge of the second portion being rotationally connected to one another by superposition of their respective peripheral edges.

8. Mechanism according to one of Claims 3 to 7, in which the radius R2 of the second portion is reduced to a value corresponding to a clearance J measured between the two outer disc carriers at the location of the second portion of the axial extension, the clearance J being sufficient to allow one of the outer disc carriers to slide on the other of the outer disc carriers during assembly.

9. Mechanism according to one of Claims 1 to 8, in which the axial extension of the outer disc carrier comprises at least one stiffening means (152, 153, 157) to stiffen the said extension.

10. Mechanism according to Claim 9, in which the said axial extension forms at least one local deformation (152, 153) extending in the opposite direction to the axis of rotation.

11. Mechanism according to Claim 10, in which the local deformation is at least partially annular.

12. Mechanism according to one of Claims 9 to 11, in which the axial extension has a splined peripheral external surface.

13. Mechanism according to one of Claims 1 to 12, in which the axial extension has at least one opening (158).
